**Europäisches Patentamt**

**European Patent Office**

**Office européen des brevets**

(19)

(11) Veröffentlichungsnummer : **0 038 949**
**B1**

(12)                    EUROPÄISCHE PATENTSCHRIFT

(45) Veröffentlichungstag der Patentschrift :
11.04.84

(51) Int. Cl.³ : **C 03 B 37/075, G 02 B 7/26**

(21) Anmeldenummer : **81102466.0**

(22) Anmeldetag : **01.04.81**

(54) Glasfaser für Lichtwellenleiterzwecke und Verfahren zu ihrer Herstellung.

(30) Priorität : 30.04.80 DE 3016705

(43) Veröffentlichungstag der Anmeldung :
04.11.81 Patentblatt 81/44

(45) Bekanntmachung des Hinweises auf die Patenterteilung : 11.04.84 Patentblatt 84/15

(84) Benannte Vertragsstaaten :
FR GB

(56) Entgegenhaltungen :
DE-A- 2 842 761
DE-A- 2 923 093
GB-A- 2 012 983

(73) Patentinhaber : **SIEMENS AKTIENGESELLSCHAFT**
**Berlin und München Wittelsbacherplatz 2**
**D-8000 München 2 (DE)**

(72) Erfinder : **Schneider, Hartmut Dipl.-Chem. Dr.rer.nat.**
**Blütenstrasse 12**
**D-8000 München 40 (DE)**
Erfinder : **Weidinger, Friedrich, Ing. grad.**
**Rosenstrasse 50**
**D-8028 Taufkirchen (DE)**

## Glasfaser für Lichtwellenleiterzwecke und Verfahren zu ihrer Herstellung

Die vorliegende Erfindung bezieht sich auf einen Lichtwellenleiter aus einstückiger Glasfaser und auf ein Verfahren zu seiner Herstellung.

Für Glasfaser-Netzwerke zur Verteilung optischer Signale in Kommunikationssystemen werden Glasfaserverzweigungen benötigt. Aus der DE-A-25 10 114 ist bereits eine Glasfaserverzweigung bekannt geworden, die aus einer Glasfaser besteht, welche von einem Ende ausgehend, entlang ihrer Achse in zwei Teilstränge aufgespalten ist. Die Aufspaltung wird dadurch erreicht, daß die Faser aus einem massiven Ausgangskörper gezogen wird und der Ausgangskörper einer lokalen Überhitzung unterworfen wird. Dadurch wird in der Formungs- und Erweichungszone der Lichtleitfaser ein starker Temperaturgradient erzeugt. Dieser Temperaturgradient wird beim Abkühlen der Faser als thermische Spannung in der fertigen Lichtleitfaser eingefroren, wodurch eine Spalttendenz der Lichtleitfaser entlang ihrer Achse auftritt. Beim Zerbrechen der so hergestellten Faser werden nun mit einer gewissen Ausbeute Faserstücke mit einem Längsspalt erhalten.

Es ist die Aufgabe der vorliegenden Erfindung, eine Glasfaser zu schaffen, die sich hervorragend für die Herstellung von Glasfaserverzweigungen eignet und die auf einfache Weise hergestellt werden kann.

Diese Aufgabe wird durch die im kennzeichnenden Teil des Anspruchs 1 angegebenen Merkmale gelöst.

Aus dieser Faser können Verzweigungen einfach durch Durchtrennen der Faser im Bereich der Öffnungen erhalten werden. Verzweigungen können mit hoher Ausbeute aus der vorgeschlagenen Faser erhalten werden.

In den Ansprüchen 3 bis 10 sind Verfahren zur Herstellung einer Faser nach Anspruch 1 angegeben. Danach kann eine Faser nach Anspruch 1 auf sehr einfache Weise mit einem herkömmlichen Ziehverfahren hergestellt werden. Besonders geeignet ist dabei ein Ziehverfahren, bei dem aus einer Vorform gezogen wird, wie es im Anspruch 4 angegeben ist.

Ein besonderer Vorteil der Erfindung besteht nun darin, daß auch auf einfache Weise eine Faser hergestellt werden kann, welche die Merkmale des Anspruchs 2 aufweist und aus welcher durch Durchtrennen im Bereich der Öffnungen auf einfachste Weise Richtkoppler hergestellt werden können.

Aus der DE-A-27 29 008 ist ein Verfahren zum Herstellen von Glasfaser-Richtkopplern bekannt geworden, bei dem zwei Glasfasern mit jeweils einem lichtführenden Faserkern verklebt oder verschweißt werden. Ob damit aber Richtkoppler für Monomode-Fasern mi beispielsweise 5 μm Kerndurchmesser hergestellt werden können, ist nicht sicher. Jedenfalls muß zur Erzielung eines für die Kopplung geeigneten Kernabstandes der Fasermantel zuvor teilweise abgeätzt werden. Ein durch Abätzen hergestellter Koppler (siehe Opt. Lett. *4* (1979) S. 29 bis 31 « Single-mode fiberoptical power divider : encapsulated etching technique ») für Monomode-Fasern erwies sich als emfdindlich gegenüber Schallwellen (siehe Opt. Lett. *4* (1979) S. 322-324 « Acoustic sensitivity of single-mode optical power dividers»). Wesentliche Schwierigkeiten liegen in der präzisen Entfernung des Mantels, der zunächst etwa 100 μm dicken Faser, dann in der Einhaltung eines definierten Abstandes zwischen den etwa 5 μm dicken Faserkernen und schließlich in der Wahl eines geeigneten Mediums, das nach dem Ätzen als optischer Mantel wirkt und das Koppelverhältnis beeinflußt.

Die soeben geschilderten Probleme treten bei einer Faser nach Anspruch 2 nicht mehr oder nur noch in geringem Maße auf. Diese Faser kann ohne weiteres als Monomode-Faser hergestellt werden. Ein vorteilhaftes Herstellungsverfahren ist in Anspruch 7 angegeben, das bevorzugterweise so ausgeführt wird, wie es im Anspruch 10 angegeben ist. Wesentliche Vorteile eines solchen Verfahrens sind einmal in der leichtkontrollierbaren Formung des Kopplers vor dem Faserziehen zu sehen, zum anderen ist ein nachträgliches Justieren des Kopplers möglich, beispielsweise durch Verbiegen oder durch Heraustrennen eines Teils der Zweikernfaser und drittens wird eine Vielzahl von Kopplern bei einem Ziehvorgang gewonnen. Schließlich ist ein solcher Koppler unempfindlicher gegen Schallwellen.

In der nun folgenden Beschreibung wird anhand der Figuren die Herstellung einer vorgeschlagenen Faser beispielhaft beschrieben. Von den Figuren zeigen :

Figur 1a bis d einen Ausgangskörper, Zwischenstufen und die endgültige Form einer zum Ziehen verwendeten Vorform ;

Figur 2 einen Abschnitt einer aus der Vorform nach Figur 1d gezogenen Faser ; und

Figur 3 Querschnitte durch die Faser nach Figur 2 längs den Schnittlinien I-I und II-II.

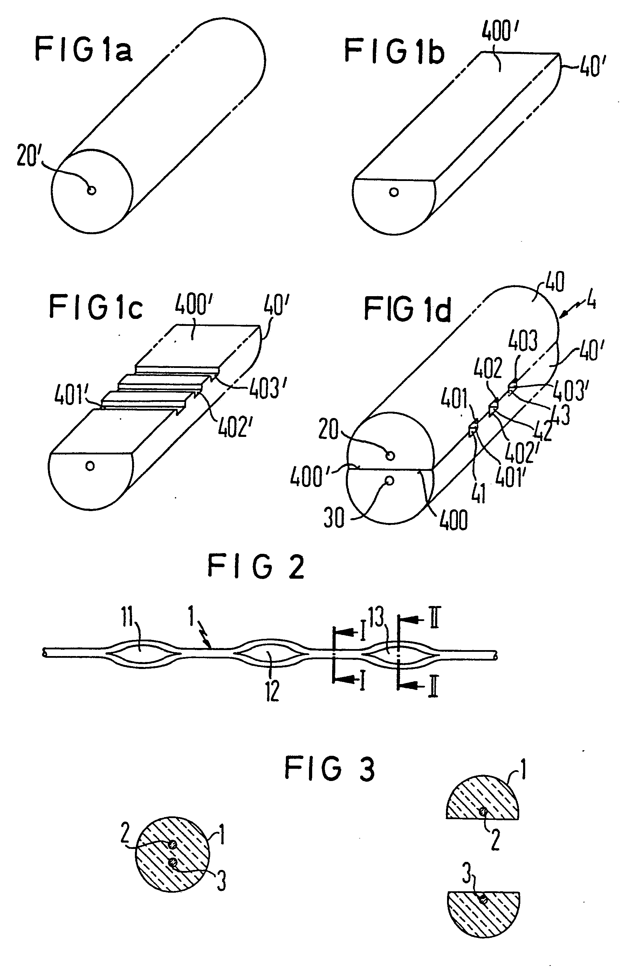

Bei dem bevorzugten Herstellungsverfahren wird die Faser aus einer eigens hergestellten Vorform gezogen. Bei der Herstellung der Vorform wird von zwei zylindrischen Glasstäben mit Kreisquerschnitt und gleichen Abmessungen ausgegangen. In der Figur 1a ist ein solcher Glasstab dargestellt. Er weist einen zentralen Kern 20' auf, der aus einem Glas besteht, das einen höheren Brechungsindex aufweist als das umgebende Mantelglas.

Jeder dieser Stäbe wird auf einer Seite so angeschliffen, daß eine parallel zur Zylinderachse verlaufende ebene Fläche 400, 400' entsteht. Dadurch entsteht ein Glaskörper, wie er in der Figur 1b dargestellt ist.

In der ebenen Fläche eines jeden dieser Glaskörper werden Nuten 401 bis 403 bzw. 401' bis 403' erzeugt, die senkrecht zur Längsrichtung des Körpers über die ganze ebene Fläche verlaufen und in Längsrichtung aufeinanderfolgend angeordnet sind. Es entsteht dann ein Glaskörper wie er in der Figur 1c dargestellt ist. Die Nuten können beispielsweise durch Ätzen oder durch Ansägen des Glaskörpers erzeugt werden. Die Tiefe der Nuten wird geringer gewählt, als der Abstand des Kerns von der ebenen Fläche. Dadurch ist gewährleistet, daß der Kern nicht verletzt wird. Die Breite einer jeden Nut und der Abstand zwischen zwei Nuten wird bei beiden Glaskörpern gleich gewählt.

Die zwei mit Nuten versehenen Glaskörper werden nun zusammengebracht, derart, daß die ebenen Flächen aufeinanderliegen und daß sich jeweils zwei Nuten gegenüberliegen. Es ist so die in Figur 1d dargestellte Körperform entstanden. Die beiden Glaskörper, aus denen er zusammengesetzt ist, sind mit 40 bzw. 40' bezeichnet, die Nuten entsprechend mit 401 bis 403 bzw. 401' bis 403' und die ebenen Flächen mit 400 bzw. 400'. Zwei sich gegenüberliegende Nuten 401, 401' oder 402, 402' oder 403, 403' bilden jeweils ein quer durch die Körperform sich erstreckendes Loch 41, 42 bzw. 43.

Die beiden zusammengebrachten Glaskörper 40 und 40' werden an den Stirnflächen mit je einem Hilfsstab verschweißt und somit fest miteinander zur endgültigen Vorform 4 verbunden.

Aus dieser Vorform wird durch Erweichen ihres Glases in an sich bekannter Weise eine Faser gezogen. Allerdings ist darauf zu achten, daß die Löcher beim Ziehen im erweichten Glas nicht vollständig miteinander verschmelzen. Dies kann durch Aufeinanderabstimmen der Ziehgeschwindigkeit und Viskosität des erweichten Glases und/oder dessen Oberflächenspannung erreicht werden. Wird dies beachtet, so entsteht eine Faser, wie sie Abschnittsweise in der Figur 2 dargestellt ist, deren Öffnungen mit den Bezugszeichen 11 bis 13 versehen sind. Die Querschnittsform der Faser zwischen zwei Öffnungen entspricht etwa einem Kreis, wie er in der Figur 3 links dargestellt ist, während die Querschnittsform der Faser im Bereich einer Öffnung etwa der in Figur 3 rechts dargestellten Form entspricht.

Aus der in Figur 2 dargestellten Faser kann eine Verzweigung oder ein .Koppler dadurch hergestellt werden, daß sie in Querrichtung im Bereich einer Öffnung durchtrennt wird.

Um bei dem beschriebenen Verfahren das Verschmelzen der Öffnungen im erweichten Glas zu erschweren, ist es zweckmäßig, die Innenwand eines Lochs in der Vorform einer Behandlung zu unterziehen, die ein Verschmelzen erschwert. Dies kann beispielsweise so erfolgen, daß ein Kohlenstoffilm auf die Innenfläche eines Lochs aufgebracht wird, der beim Faserziehen mit dem Quarzglas zu gasförmigen Produkten, beispielsweise SiO, CO, abreagiert, die aufgrund ihres Dampfdruckes das Verschmelzen der Öffnungen verhindern. Zweckmäßigerweise wird der Kohlenstoffilm vor dem Zusammenbringen der beiden Körper 40 und 40' auf die Flächen der Nuten aufgebracht.

Bei einem Ausführungsbeispiel wurden Kern-Mantel-Glasstäbe mit undotiertem Kern verwendet. Solche Stäbe werden von der Firma Heraeus unter dem Namen Herasil® vertrieben und sie unterscheiden sich in ihren mechanischen und thermischen Eigenschaften kaum von einer Quarzglasvorform für Monomodefasern mit $GeO_2$-Dotierung im Kern. Der Durchmesser eines jeden Stabes betrug 10 mm.

Mit Hilfe eines rotierenden Schleifers wurden bei jedem Stab die ebenen Flächen erzeugt, und zwar so, daß der Abstand der Achse eines Kerns von der ebenen Fläche 1 mm betrug.

In die geschliffene ebene Fläche eines jeden Stabes wurden die Nuten eingesägt. Die Tiefe der Nuten betrug 0,5 mm, ihre Breite 0,3 mm und der Abstand zwischen zwei Nuten betrug 0,6 mm. Der Abstand zwischen zwei Nuten bestimmt im übrigen maßgeblich die Kopplerlänge. Die Breite der Nuten kann frei gewählt werden.

Die so auf einer Länge von 30 mm mit Nuten versehenen ebenen Flächen wurden zusammengedrückt und an den beiden Enden mit je einem Hilfsstab zur Vorform verschweißt. Bei einer Muffeltemperatur von 1 950 °C wurde die Faser mit einer Ziehgeschwindigkeit von 20 m/min gezogen. Es entstand eine Faser mit 100 µm Durchmesser. Die Länge eines Lochs betrug 1,5 m, der Abstand zwischen den Löchern betrug 7,5 m.

Wenn in der Vorform der Abstand zwischen den Kernen hinreichend klein gewählt wird, sind sie in der gezogenen Faser zwischen den Öffnungen miteinander verschmolzen und es werden dann Verzweigungen erhalten. Verzweigungen könnten auch aus gelochten Vorformen ohne Kerne erhalten werden. Ein Koppler kann auch durch Verspleißen zweier Verzweigungsstücke erhalten werden.

**Ansprüche**

1. Lichtwellenleiter aus einstückiger Glasfaser dadurch gekennzeichnet, daß in der Glasfaser (1) eine oder mehrere in Längsrichtung der Faser aufeinanderfolgende, quer verlaufende, durchgehende, randseitig geschlossene Öffnungen (11, 12, 13) ausgebildet sind.

2. Faser nach Anspruch 1, dadurch gekennzeichnet, daß in ihrem Inneren zwei in der Längsrichtung nebeneinander verlaufende Kerne (2, 3) mit im Vergleich zum umgebenden Mantelglas höherer Brechzahl ausgebildet sind, von denen einer auf einer Seite und der andere auf der anderen Seite der Öffnung (11, 12, 13) vorbeiführt, und die sich zwischen zwei Öffnungen so nahekommen, daß Licht zwischen ihnen überkoppeln kann.

3. Verfahren zum Herstellen eines Lichtwellenleiters nach Anspruch 1 oder 2, dadurch gekennzeichnet, daß die Faser aus einem erweichten Glas gezogen wird, daß in dem noch weichen gezogenen Glas die Ausbildung einer oder mehrerer in Ziehrichtung aufeinanderfolgender Öffnungen bewirkt wird, und daß Maßnahmen ergriffen werden, die bewirken, daß eine entstandene Öffnung sich nicht mehr vollständig verschließen kann.

4. Verfahren nach Anspruch 3, dadurch gekennzeichnet, daß die Faser (1) aus einer Vorform (4) gezogen wird, die ein oder mehrere in Ziehrichtung aufeinanderfolgende und quer dazu durch die Vorform sich erstreckende Löcher (41, 42, 43) aufweist, von denen jedes die Ausbildung einer Öffnung im erweichten Glas bewirkt.

5. Verfahren nach Anspruch 3 oder 4, dadurch gekennzeichnet, daß die Ziehgeschwindigkeit und die Viskosität und/oder die Oberflächenspannung des erweichten Glases so aufeinander abgestimmt werden, daß eine im erweichten Glas ausgebildete Öffnung sich von selbst nicht mehr vollständig verschliessen kann.

6. Verfahren nach Anspruch 4 oder nach den Ansprüchen 4 und 5, dadurch gekennzeichnet, daß eine Innenwand eines Lochs (41, 42, 43) in der Vorform (4) einer Behandlung unterzogen wird, die ein Verschließen der aus diesem Loch entstehenden Öffnung im erweichten Glas erschwert.

7. Verfahren nach Anspruch 4 oder 6 zur Herstellung einer Faser nach Anspruch 2, dadurch gekennzeichnet, daß die Vorform (4) zwei in Ziehrichtung verlaufende Kerne (20, 30) höherer Brechzahl aufweist, von denen einer auf einer Seite und der andere auf der anderen Seite der Löcher (41, 42, 43) verläuft und die zumindest außerhalb oder zwischen den Löchern einen Abstand voneinander aufweisen, der so gering bemessen ist, daß sich die ausgezogenen Kerne so nahe kommen, daß Licht zwischen ihnen überkoppeln kann.

8. Verfahren zum Herstellen einer Vorform für ein Verfahren nach Anspruch 4, dadurch gekennzeichnet, daß von zwei Glaskörpern (40, 40') ausgegangen wird, von denen jeder eine in einer Längsrichtung des Körpers verlaufende ebene Fläche (400, 400') aufweist, daß in die ebene Fläche (400, 400') wenigstens eines Körpers (40, 40') eine oder mehrere in der Längsrichtung aufeinanderfolgende und quer dazu über die ganze Fläche verlaufende Nuten (401, 402, 403 ; 401', 402', 403') ausgebildet werden, daß die ebenen Flächen (400, 400') der beiden Körper (40, 40') zusammengebracht und die beiden Körper (40, 40') fest miteinander verbunden werden.

9. Verfahren nach Anspruch 8, dadurch gekennzeichnet, daß in den ebenen Flächen (400, 400') beider Körper (40, 40') Nuten (401 bis 403 ; 401' bis 403') ausgebildet werden, und daß die Körper so zusammengebracht werden, daß sich Nuten (401, 401' ; 402, 402' ; 403, 403') paarweise gegenüberliegen.

10. Verfahren nach Anspruch 8 oder 9 zum Herstellen einer Vorform für ein Verfahren nach Anspruch 7, dadurch gekennzeichnet, daß jeder Glaskörper (40, 40') einen in der Längsrichtung verlaufenden Kern (20, 30) höherer Brechzahl aufweist, und daß die Tiefe der Nuten (401 bis 403 ; 401' bis 403') geringer als der Abstand des Kerns von der ebenen Fläche (400, 400') des Körpers (40, 40') gewählt wird, so daß der Kern nich verletzt wird.

## Claims

1. A light waveguide in the form of an integral glass fibre, characterised in that in the glass fibre (1), there are formed one or more transversely disposed, openings (11, 12, 13) extending through the fibre, which follow one another in the longitudinal direction of the fibre, and are closed at their ends.

2. A fibre according to Claim 1, characterised in that in its interior, there are formed two cores (2, 3) which are arranged on beside another in the longitudinal direction and which have a refractive index which is higher than the surrounding casing glass, one of which cores leads past on side of the openings (11, 12, 13) and the other of which leads past the other side thereof, and which approach one another sufficiently between two openings as to enable light to be cross-coupled between them.

3. A process for the production of a light waveguide according to Claim 1 or Claim 2, characterised in that the fibre is drawn from a softened glass ; that one or more than one openings which follow one another in the direction of drawing are formed in the still soft drawn glass, and that measures are taken to ensure that an opening, once formed, can no longer close completely.

4. A process according to Claim 3, characterised in that the fibre (1) is drawn from a preform (4) which has one or more holes (41, 42, 43) which follow one another in the direction of drawing and extend transversely through the preform, each of which holes leads to the formation of an opening in the softened glass.

5. A process according to Claim 3 or Claim 4, characterised in that the drawing speed and the viscosity and/or surface tension of the softened glass are so matched to one another that, once an opening has formed in the softened glass, it can no longer close completely of its own accord.

6. A process according to Claim 4, or Claims 4 and 5, characterised in that an inner wall of a hole (41, 42, 43) in the preform (4) is subjected to a treatment which impedes the closure of the opening in the softened glass which is formed from this hole.

7. A process according to Claim 4 or Claim 6 for the production of a fibre as claimed in Claim 2, characterised in that the preform (4) has two cores (20, 30) which are arranged in the direction of drawing and which have a higher refractive index, one of which leads past one side of the holes (41, 42, 43) and the other of which leads past the other side thereof, and which, at least outside of or between the holes, are spaced from one another by a distance which is arranged to be sufficiently small as to ensure that the drawn cores approach one another sufficiently closely as to enable light to be cross-coupled between them.

8. A process for the production of a preform for a process according to Claim 4, characterised in that two glass bodies (40, 40') are used as starting materials, each of which bodies has a flat surface (400, 400') which is disposed in the longitudinal direction of the body ; that in the flat surface (400, 400') of a least one body (40, 40'), there is formed one or more grooves (401, 402, 403 ; 401', 402', 403') which follow one another in the longitudinal direction and extend transversely thereto over the entire surface ; and that the flat surfaces (400, 400') of the two bodies (40, 40') are brought together and the two bodies (40, 40') are permanently connected to one another.

9. A process according to Claim 8, characterised in that grooves (401 to 403 ; 401' to 403') are formed in the flat surfaces (400, 400') of the two bodies (40, 40') ; and that the bodies are brought together in such a way that the grooves (401, 401' ; 402, 402' ; 403, 403') are arranged opposite to one another in pairs.

10. A process according to Claim 8 or Claim 9 for the production of a preform for a process according to Claim 7, characterised in that each glass body (40, 40') has a core (20, 30) which is arranged in the longitudinal direction and has a higher refractive index ; and that the depth of the grooves (401 to 403 ; 401' to 403') is selected to be smaller than the distance of the core from the flat surface (400, 400') of the body (40, 40') so that the core is not damaged.

**Revendications**

1. Guide de lumière constitué par une fibre de verre d'une seule pièce, caractérisé par le fait que dans la fibre de verre (1) sont ménagées une ou plusieurs ouvertures traversantes (11, 12, 13) qui sont fermées au niveau de leurs bords, s'étendent transversalement et sont disposées les unes à la suite des autres suivant la direction longitudinale de la fibre.

2. Fibre suivant la revendication 1, caractérisée par le fait qu'à l'intérieur sont formés des cœurs (2, 3) qui s'étendent l'un à côté de l'autre suivant la direction longitudinale et qui présentent un indice de réfraction plus important par rapport au verre de la gaine qui les entoure, un des cœurs passant d'un côté et l'autre de l'autre côté de l'ouverture (10, 12, 13), et qui se rapprochent entre deux ouvertures de manière que de la lumière puisse être transmise entre eux.

3. Procédé pour fabriquer un guide de lumière suivant la revendication 1 ou 2, caractérisé par le fait que la fibre est étirée à partir d'un verre ramolli, que la formation d'une ou plusieurs ouvertures qui se suivent dans le sens de l'étirage est effectuée dans le verre étiré encore mou, et qu'il est pris des mesures pour qu'une ouverture existante ne se ferme pas complètement.

4. Procédé suivant la revendication 3, caractérisé par le fait que la fibre (1) est étirée à partir d'une préforme (4) qui comporte un ou plusieurs trous (41, 42, 43) qui se suivent suivant la direction d'étirage et qui s'étendent transversalement par rapport à celle-ci dans la préforme, et à partir desquels a respectivement lieu la formation d'une ouverture dans le verre ramolli.

5. Procédé suivant la revendication 3 ou 4, caractérisé par le fait que la vitesse d'étirage et la viscosité et/ou la tension superficielle du verre ramolli sont accordées l'une avec l'autre de manière qu'une ouverture formée dans le verre ramolli ne puisse plus se fermer complètement d'elle-même.

6. Procédé suivant la revendication 4 ou suivant les revendications 4 et 5, caractérisé par le fait qu'une paroi intérieure d'un trou (41, 42, 43) dans la préforme (4) est soumise à un traitement qui rend plus difficile une fermeture de l'ouverture obtenue à partir de ce trou dans le verre ramolli.

7. Procédé suivant la revendication 4 ou 6, pour fabriquer une fibre suivant la revendication 2, caractérisé par le fait que la préforme (4) comporte deux cœurs (20, 30) qui s'étendent suivant la direction d'étirage et qui présentent un indice de réfraction plus élevé, un des cœurs s'étendant d'un côté et l'autre de l'autre côté des trous (41, 42, 43), et ces cœurs présentant une distance mutuelle, au moins à l'extérieur ou entre les trous, qui est dimensionnée de façon suffisamment faible pour que les cœurs étirés se rapprochent suffisamment pour pouvoir transmettre de la lumière entre eux.

8. Procédé pour fabriquer une préforme pour un procédé suivant la revendication 4, caractérisé par le fait qu'on part de deux corps en verre (40, 40'), qui comportent chacun une surface plane (400, 400') qui s'étend suivant une direction longitudinale du corps, que dans la surface plane (400, 400') d'au moins un des corps (40, 40') sont ménagées une ou plusieurs rainures (401, 402, 403 ; 401', 402', 403') qui sont disposées les unes à côté des autres suivant la direction longitudinale et qui s'étendent transversalement par rapport à celle-ci sur toute la surface, que les surfaces (400, 400') des deux corps (40, 40') sont aboutées et que les deux corps (40, 40') sont couplés rigidement l'un avec l'autre.

9. Procédé suivant la revendication 8, caractérisé par le fait que des rainures (401 à 403 ; 401' à 403') sont ménagées dans les surfaces planes (400, 400') des deux corps (40, 40'), et que les corps sont aboutés de manière que les rainures (401, 401' ; 402, 402' ; 403, 403') se trouvent l'une en face de l'autre par paires.

10. Procédé suivant la revendication 8 ou 9 pour fabriquer une préforme pour un procédé suivant la revendication 7, caractérisé par le fait que chaque corps en verre (40, 40') comporte un cœur (20, 30) qui s'étend suivant la direction longitudinale et possède un indice de réfraction plus élevé, et que la profondeur des rainures (401 à 403 ; 401' à 403') est choisie plus faible que la distance du cœur par rapport à la surface plane (400, 400') du corps (40, 40') de manière que le cœur ne soit pas endommagé.

FIG 1a

FIG 1b

FIG 1c

FIG 1d

FIG 2

FIG 3